# EUROPEAN PATENT APPLICATION

(11) **EP 3 637 749 A1**
(43) Date of publication of application: **15.04.2020**
(21) Application number: 19199719.6
(22) Date of filing: 26.09.2019
(51) Int. Cl.: H04M 3/51, H04M 3/22, H04M 7/00, H04L 29/06, H04M 3/16

(54) **DYNAMIC AGENT MEDIA TYPE SELECTION BASED ON COMMUNICATION SESSION QUALITY OF SERVICE PARAMETERS**

(30) Priority: 10.10.2018 US 201816156068
(71) Applicant: Avaya Inc., Santa Clara, CA 95054-1233 (US)
(72) Inventor: BALASAYGUN, Mehmet, Freehold, New Jersey 07728 (US)
(74) Representative: Williams, David John

(57) **Abstract**

A value of a quality of service parameter is monitored based on one or more communication sessions with an agent communication endpoint of a contact center agent. For example, a jitter parameter is monitored in an audio communication session with the contact center agent. A determination is made if the value of the quality of service parameter does not meet a threshold level. For example, a minimum amount of jitter threshold. In response to determining that the value of the quality of service parameter does not meet the threshold level, the agent communication endpoint is prevented from receiving new communication sessions in one or more media types originally supported by the contact center agent. For example, the agent communication endpoint is prevented from receiving any new voice communication sessions while still being allowed to receive communication sessions in other mediums, such as Instant Messaging and email.

## Description

### FIELD

The disclosure relates generally to contact centers and particularly to agent selection in a contact center based on quality of service parameters.

### BACKGROUND

Objectives for contact centers typically include new sales generation, growing a customer base, providing service functions, etc. All of the objectives are designed to grow the contact center business while maximizing the value of each interaction with a customer. Part of maximizing the value of an interaction with a customer includes striving for the highest possible customer satisfaction. When a call in any channel (e.g., video, audio, text, and other channels) degrades to the point that it is less than optimal for the customer, the customer's satisfaction is likely to diminish. Even if the quality is sufficient to complete the interaction, the value provided to the customer may not meet quality goals for the contact center's objectives.

### SUMMARY

These and other needs are addressed by the various embodiments and configurations of the present disclosure. A value of a quality of service parameter is monitored based on one or more communication sessions with an agent communication endpoint of a contact center agent. For example, a jitter parameter is monitored in an audio communication session with the contact center agent. A determination is made if the value of the quality of service parameter does not meet a threshold level. For example, a minimum amount of jitter threshold. In response to determining that the value of the quality of service parameter does not meet the threshold level, the agent communication endpoint is prevented from receiving new communication sessions in one or more media types originally supported by the contact center agent. For example, the agent communication endpoint is prevented from receiving any new voice communication sessions while still being allowed to receive communication sessions in other mediums, such as Instant Messaging and email.

The phrases "at least one", "one or more", "or", and "and/or" are open-ended expressions that are both conjunctive and disjunctive in operation. For example, each of the expressions "at least one of A, B and C", "at least one of A, B, or C", "one or more of A, B, and C", "one or more of A, B, or C", "A, B, and/or C", and "A, B, or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material".

Aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Any combination of one or more computer readable medium(s) may be utilized. The computer readable medium may be a computer readable signal medium or a computer readable storage medium.

A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including but not limited to wireless, wireline, optical fiber cable, RF, etc., or any suitable combination of the foregoing.

The terms "determine", "calculate" and "compute," and variations thereof, as used herein, are used interchangeably and include any type of methodology, process, mathematical operation or technique.

The term "means" as used herein shall be given its broadest possible interpretation in accordance with 35 U.S.C., Section 112(f) and/or Section 112, Paragraph 6. Accordingly, a claim incorporating the term "means" shall cover all structures, materials, or acts set forth herein, and all of the equivalents thereof. Further, the structures, materials or acts and the equivalents thereof shall include all those described in the summary, brief description of the drawings, detailed description, abstract, and claims themselves.

The preceding is a simplified summary to provide an understanding of some aspects of the disclosure. This summary is neither an extensive nor exhaustive overview of the disclosure and its various embodiments. It is intended neither to identify key or critical elements of the disclosure nor to delineate the scope of the disclosure but to present selected concepts of the disclosure in a simplified form as an introduction to the more detailed description presented below. As will be appreciated, other embodiments of the disclosure are possible utilizing, alone or in combination, one or more of the features set forth above or described in detail below. Also, while the disclosure is presented in terms of exemplary embodiments, it should be appreciated that individual aspects of the disclosure can be separately claimed.

### BRIEF DESCRIPTION OF THE DRAWINGS

Fig. 1 is a block diagram of a first illustrative system for dynamically selecting supported contact center agent media type(s) based on quality of service parameter(s).
Fig. 2 is a flow diagram of a process for dynamically selecting supported contact center agent media type(s) based on quality of service parameter(s).
Fig. 3 is a flow diagram of a process for identifying if different types of quality service parameter(s) meet a threshold level.
Fig. 4 is a flow diagram of a process for automatically identifying quality of service parameter(s) and threshold level(s) based on prior communication sessions and customer feedback.
Fig. 5 is a state diagram that shows what media types a contact center agent is supporting based on quality of service parameter(s).

### DETAILED DESCRIPTION

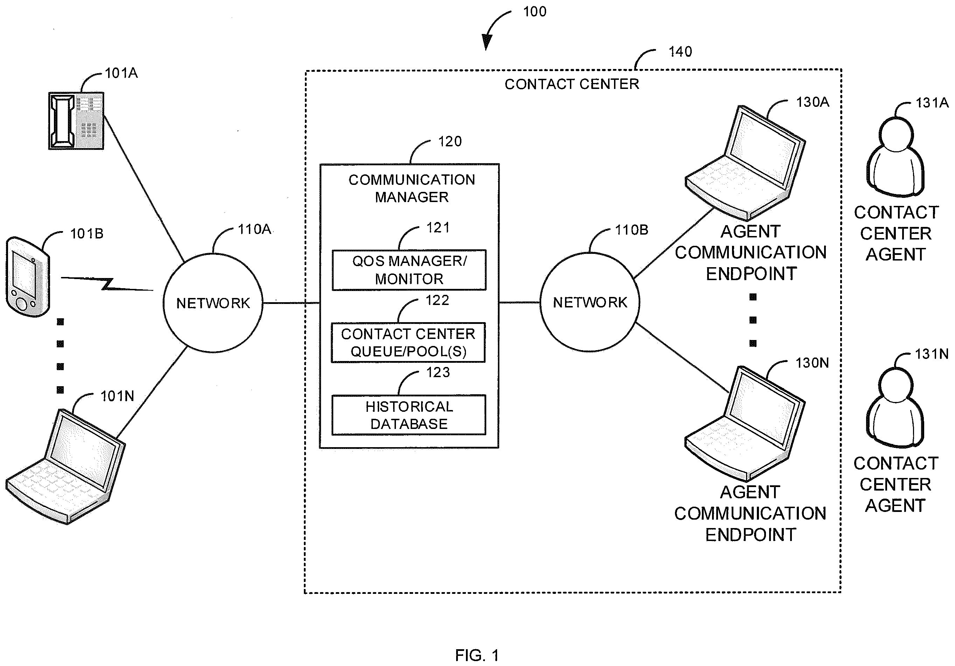

Fig. 1 is a block diagram of a first illustrative system 100 for dynamically selecting supported contact center agent media type(s) based on quality of service parameter(s). The first illustrative system 100 comprises customer communication endpoints 101A-101N, networks 110A-110B, a communication manager 120, agent communication endpoints 130A-130N and a contact center 140. In addition, contact center agents 131A-131N are shown at the agent communication endpoints 130A-130N.

The customer communication endpoints 101A-101N can be or may include any user communication endpoint device that can communicate on the network 110A, such as a Personal Computer (PC), a telephone, a video system, a cellular telephone, a Personal Digital Assistant (PDA), a tablet device, a notebook device, a smart phone, a conferencing system, and the like. The customer communication endpoints 101A-101N are devices where a communication session ends. The customer communication endpoints 101A-101N are not network elements that facilitate and/or relay a communication session in the network 110A, such as a communication manager 120 or router. As shown in Fig. 1, any number of customer communication endpoints 101A-101N may be connected to the network 110A.

The networks 110A-110B can be or may include any collection of communication equipment that can send and receive electronic communications, such as the Internet, a Wide Area Network (WAN), a Local Area Network (LAN), a Voice over IP Network (VoIP), the Public Switched Telephone Network (PSTN), a packet switched network, a circuit switched network, a cellular network, a combination of these, and the like. The networks 110A-110B can use a variety of electronic protocols, such as Ethernet, Internet Protocol (IP), Session Initiation Protocol (SIP), Integrated Services Digital Network (ISDN), and the like. Thus, the networks 110A-110B are an electronic communication networks configured to carry messages via packets and/or circuit switched communications. Typically, the network 110A is a public network, such as, the Internet/PSTN and the network 110B is a private network, such as a corporate network. However, the networks 110A-110B may comprise various combinations of the networks described above.

The contact center 140 can be or may include any hardware coupled with software that can manage incoming/outgoing communications from/to the customer communication endpoints 101A-101N and the agent communication endpoints 130A-130N. The contact center 140, as shown in Fig. 1, comprises the communication manager 120, the network 110B, and the agent communication endpoints 130A-130N. Although not shown, the contact center 140 may comprise additional elements, such as a firewall, a Session Boarder Controller (SBC), a packet sniffer, a router, a proxy server, and/or the like. In some instances, one or more of the agent communication endpoints 130A-130N may be located remotely on the network 110A. In addition, the contact center 140 may comprise multiple contact centers 140 at multiple locations.

The communication manager 120 can be or may include any hardware coupled with software/firmware that can manage and route communication sessions between the customer communication endpoints 101A-101N and the agent communication endpoints 130A-130N. For example, the communication manager 120 may be a Private Branch Exchange, a central office switch, a router, a proxy server, a session manager, and/or the like. The communication sessions may be any type of electronic communication sessions, such as voice, video, Instant Messaging (IM), email, text messaging, virtual reality, social media, and/or the like. The communication manager 120 further comprises a Quality of Service (QoS) manager/monitor 121, contact center queue/pool(s) 122, and a historical database 123. In addition, the communication manager 120 may comprise other elements, such as an Interactive Voice Response (IVR) system, a web server, and/or the like. In one embodiment, the elements 121-123 may be located on another network elements within the contact center 140.

The QoS manager/monitor 121 can be or may include any hardware coupled with software that can manage and monitor QoS of communication sessions in the contact center 140. The QoS manager/monitor 121 may include various elements that can identify quality of service parameters for a communication session, such as a packet sniffer, a router, a proxy server, and/or the like. The QoS manager/monitor 121 may be distributed in various elements within the contact center 140, such as, in the communication manager 120, on nodes on the network 110B, in a router, in the agent communication endpoints 130A-130N, and/or the like.

The contact center queue/pool(s) 122 can be or may include any computer construct that can hold communication sessions that are then later routed to the agent communication endpoints 130A-130N/contact center agents 131A-131N. A contact center queue 122 typically holds communications based on various criteria, such as in a first-in-first-out basis. A contact center pool 122 may hold communication sessions until a contact center agent 131 selects a communication session from the contact center pool 122. A contact center queue/pool 122 may be administered to hold a single type of communication media and/or supported product or service. For example, there may be separate contact center queue/pools 122 that individually support one of voice, video, IM, email, text messaging, virtual reality, and social media communication sessions for a specific type of product (e.g., television sets).

The historical database 123 can be or may include any type of database for storing information, such as a relational database, an object-oriented database, a file system, a directory service, and/or the like. The historical database 123 may include historical information that has been gathered overtime by the QoS manager/monitor 121. The historical database 123 may include customer feedback for specific communication sessions. For example, the customer may be asked to take a survey to rate the quality of a communication session with a contact center agent 131. The historical database 123 may include corresponding QoS parameter information for the communication sessions where customer feedback was provided, such as, packet loss, jitter, codecs used, video brightness/dimness, a video artifact (e.g., pixelization (where specific pixels are corrupted), partial green screen, full green screen, etc.), an unexpected gap parameter (unexpected periods where there is no sound), an unexpected sound (e.g., static/popping sounds), a low volume level, no audio, a high volume level, and a level of noise (e.g., a high background noise), dropped/lost emails, dropped calls, dropped IM sessions, missing text messages, social media network crashes, corrupted text communications, failed communication managers 120, loss of video, distorted video, bad echo cancelation, non-working microphone, non-working camera, failure of an IM server, network failures (e.g., network 110A/110B), and/or the like.

The agent communication endpoints 130A-130N can be or may include different communication devices. For example, the agent communication endpoints 130A-130N may be similar or identical to the customer communication endpoints 101A-101N. In one embodiment, the agent communication endpoints 130A-130N may comprise multiple agent communication endpoints 130A-130N, such as a personal computer and a telephone.

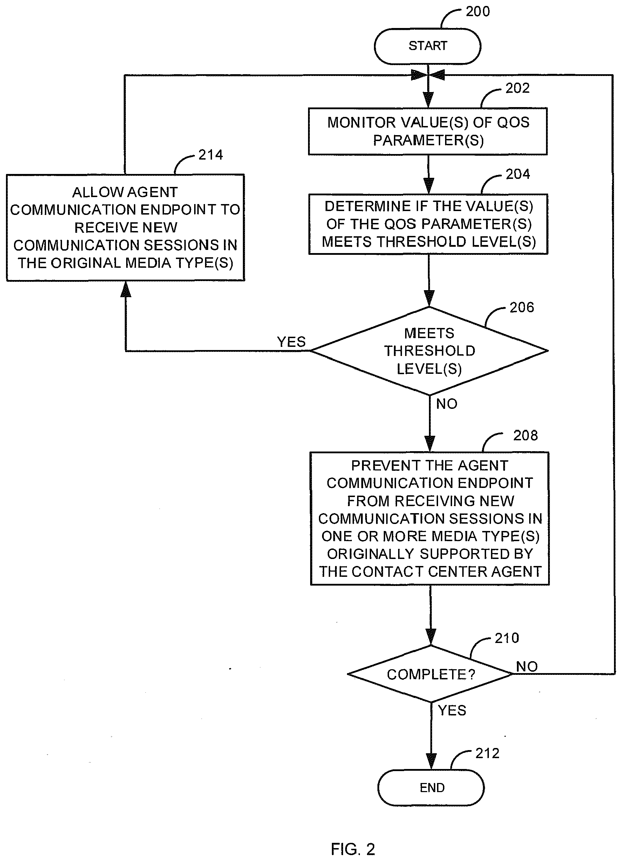

Fig. 2 is a flow diagram of a process for dynamically selecting supported contact center agent media types based on quality of service parameter(s). Illustratively, the customer communication endpoints 101A-101N, the communication manager 120, the QoS manager/monitor 121, the contact center queue/pool(s) 122, the historical database 123, the agent communication endpoints 130A-130N, and the contact center 140 are stored-program-controlled entities, such as a computer or microprocessor, which performs the method of Figs. 2-5 and the processes described herein by executing program instructions stored in a computer readable storage medium, such as a memory (i.e., a computer memory, a hard disk, and/or the like). Although the methods described in Figs. 2-5 are shown in a specific order, one of skill in the art would recognize that the steps in Figs. 2-5 may be implemented in different orders and/or be implemented in a multi-threaded environment. Moreover, various steps may be omitted or added based on implementation.

The process starts in step 200. The QoS manager/monitor 121 monitors values of QoS parameters, in step 202, for one or more communication sessions with an agent communication endpoint 130 of a contact center agent 131. For example, the QoS manager/monitor 121 may monitor a packet loss value, a jitter value, a codec type value, a video brightness/dimness value, an unexpected gap value (an unexpected gap in an audio (no sound) and/or video communication session (no video)), an unexpected sound value, a low volume level value (e.g. to detect a possible microphone failure), a high volume value, a noise level value, a dropped/lost email value, a dropped call value, a dropped IM session value, a missing text message value, a social media network crash value (e.g., when a social media network is unavailable or down), a corrupted text communication value, a failed communication manager value, a loss of video value, a distorted video value, a bad echo cancelation value, a non-working microphone value, a non-working camera value, a failure of an IM server value, a bit rate value, a transmission delay value, a number of bad packets value (e.g., failed a Cyclic Redundancy Check), a latency value, an out-of-order packet value, and/or the like. The monitored value(s) of the QoS parameter(s) can be related to any type of communication session that is supported by the contact center 140. In addition, the values of multiple QoS parameters and/or any combination of QoS values may be monitored in step 202.

The value(s) of the QoS parameter(s) may be monitored in various ways, such as reading from a database (e.g., a Simple Network Management Protocol (SNMP) Management Information Base (MIB), from a device (e.g., the agent communication endpoint 130), based on receiving packets of a communication session, from a network sniffer, from a router or other network device, and/or the like. The QoS values may be in various formats, such as, a numeric value, a bit value, a text value, a floating point value, a percentage, and/or the like. The QoS parameters may be based only on media streams/communication sessions that originate from the contact center 140. For example, if there is a packet loss problem with a media stream originating from a customer communication endpoint 101, the problem may not have anything to do with the contact center 140 itself because the packets are lost before arriving at the contact center 140.

The QoS manager/monitor 121 determines, in step 204, if the value(s) of the QoS parameter(s) meets threshold level(s). For example, the threshold level may be a tolerance level of jitter for one or more audio/video communication sessions. Alternatively, threshold level may be for a number of dropped/failed IM sessions in a time period. For example, if the network 110B has a high packet loss, this may cause an IM session to be dropped. The threshold level may be for one or more video communication sessions where a sent video stream has become corrupted, dropped (e.g., due to network congestion or equipment failure), is reduced in video quality (e.g., switched to a different codec), and/or the like. The threshold level may be above, equal to, below, above/equal to, below/equal to, within a time period, between communication sessions, and/or the like.

Step 204 may be used to allow a contact center agent 131 to now receive a media type where the QoS parameter previously did not meet the threshold level (e.g., in step 208). For example, a test call can be monitored by the QoS Manager/Monitor 121 to determine that the threshold level is now being met.

If the QoS value does not meet the threshold (e.g., is above an acceptable jitter level over three consecutive audio communication sessions with the same contact center agent 131), in step 206, the QoS manager/monitor 121 prevents, in step 208, the agent communication endpoint 130 from receiving (and possibly initiating or being included in an initiated communication session (e.g., by an auto-dialer)) new communication sessions in one or more media type(s) that were originally supported by the contact center agent 131. For example, the contact center agent 131 may be originally administered to support voice, video, IM and email (administered and original can be used interchangeably). If the acceptable jitter value was exceeded for three back-to-back audio communication sessions in step 206, the QoS manager/monitor 121 may prevent the agent communication endpoint 130 from receiving both audio and video communications (while still allowing the contact center agent 131 to receive IM and email communication sessions).

How the QoS manager/monitor 121 prevents the agent communication endpoint 130 from receiving new communication sessions may occur in various ways. The QoS manager/monitor 121 can remove the contact center agent 131 from supporting one or more contact center queue/ pools 122 (e.g., two different contact center queues 122, one that supports voice and one that supports video). As a result, the agent communication endpoint 130 will no longer receive incoming voice/video calls while other agent communication endpoints 130 may still be able to receive voice/video calls from the same contact center queues 122. The contact center agent 131 may still be able to receive communication sessions from other contact center queues/pools 122 that support IM and email communication sessions in step 208.

In one embodiment, the contact center agent 131 may be automatically placed in auxiliary mode by the QoS manager/monitor 121. When the contact center agent 131 is automatically placed into auxiliary mode, the agent communication endpoint 130 is prevented from receiving any new communication sessions in any media type. In other words, the contact center agent 131 is automatically taken out-of-service based on one or more QoS parameters not meeting a threshold level(s).

In one embodiment, if the contact center agent 131 is engaged in a communication session type (e.g., audio) that the contact is going be prevented from supporting in step 208, the contact center agent 131 may be allowed to complete the current communication session before the change of step 208 takes place.

The QoS manager/monitor 121 determines, in step 210, if the process is complete. If the process is complete in step 210, the process ends in step 212. For example, the process may be complete when the contact center agent 131 logs out of the contact center 140 or when the contact center agent 131 manually places himself/herself in auxiliary mode. If the process is not complete in step 210, the process goes back to step 202.

If the value of the quality of service parameter(s) meets the threshold (i.e., the QoS measurements meet an acceptable threshold level), in step 206, the QoS manager/monitor 121 allows the agent communication endpoint 130 to receive new communication sessions in the original media type(s) in step 214. For example, if the QoS manager/monitor 121 had previously prevented the agent communication endpoint 130 from receiving voice/video communication sessions, in step 208, the QoS manager/monitor 121 may now allow the agent communication endpoint 130 to receive the new audio/video (or one of the two) communication sessions in step 214 (i.e., the jitter value is meets the acceptable jitter level). In this case, the jitter level may be determined by a sniffer on the network 110B that monitors delays/congestion in the network 110B.

In one embodiment, the QoS manager/monitor 121 may proactively work to rectify the QoS problem. For example, the QoS manager/monitor 121 may increase a brightness of lights, increase microphone level, reroute communication session through a different network, and/or the like.

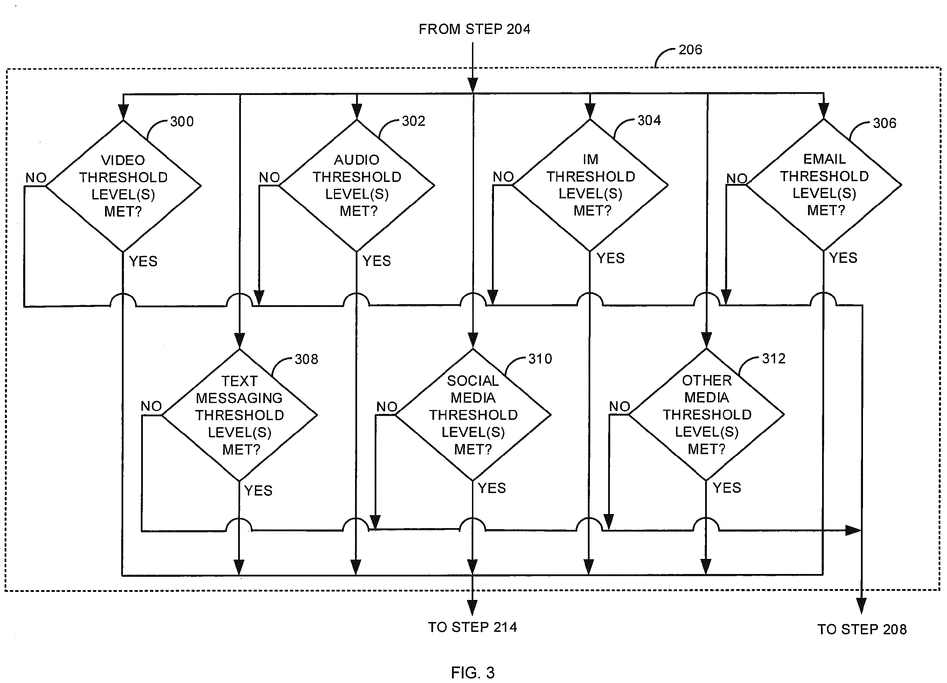

Fig. 3 is a flow diagram of a process for identifying if different types of quality service parameter(s) meet a threshold level. Fig. 3 is an exemplary embodiment of step 206 of Fig. 2. In step 204, the QoS manager/monitor 121 can determine multiple QoS parameters at the same time. For example, the QoS manager/monitor 121 may use multiple threads/processes to simultaneously monitor different QoS parameters. The multiple threads/processes may be separate based on the media type and/or a particular QoS parameter. The QoS manager/monitor 121 may monitor multiple QoS parameters at the same time for a same type of media. For example, for audio communication sessions, the QoS manager/monitor 121 may monitor, packet loss, jitter, connection failure, and/or the like at the same time for a communication session.

After determining if the value(s) of the QoS parameters meets the threshold level(s) in step 204, the QoS manager/monitor 121 determines, in step 300, if the video QoS parameter(s) meet the threshold(s). For example, the QoS manager/monitor 121 may determine lost packets, jitter, and video dimness (looking at the actual video content) for a video communication session in step 300. If the video QoS parameter(s) meet the threshold(s) (are acceptable) in step 300, the process goes to step 214. Otherwise, if the video QoS parameter(s) do not meet the threshold(s) in step 300, the process goes to step-208.

The QoS manager/monitor 121 determines, in step 302, if the audio QoS parameter(s) meet the threshold(s). For example, the QoS manager/monitor 121 may determine lost packets, jitter, and unexpected sounds (e.g., popping /crackling noises) for an audio communication session in step 302. If the audio QoS parameter(s) meet the threshold(s) (are acceptable) in step 302, the process goes to step 214. Otherwise, if the audio QoS parameter(s) do not meet the threshold(s) in step 302, the process goes to step 208.

The QoS manager/monitor 121 determines, in step 304, if the IM QoS parameter(s) meet the threshold(s). For example, the QoS manager/monitor 121 may determine dropped IM sessions for a number of IM communication sessions and IM server failures in step 304. If the IM QoS parameter(s) meet the threshold(s) (are acceptable) in step 304, the process goes to step 214. Otherwise, if the IM QoS parameter(s) do not meet the threshold(s) in step 304, the process goes to step 208.

The QoS manager/monitor 121 determines, in step 306, if the email QoS parameter(s) meet the threshold(s). For example, the QoS manager/monitor 121 may determine email server/network failures in step 306. If the email QoS parameter(s) meet the threshold(s) (are acceptable) in step 306, the process goes to step 214. Otherwise, if the email QoS parameter(s) do not meet the threshold(s) in step 306, the process goes to step 208.

The QoS manager/monitor 121 determines, in step 308, if the text messaging QoS parameter(s) meet the threshold(s). For example, the QoS manager/monitor 121 may determine network failures and lost text messages in step 308. If the text messaging QoS parameter(s) meet the threshold(s) (are acceptable) in step 308, the process goes to step 214. Otherwise, if the text messaging QoS parameter(s) do not meet the threshold(s) in step 308, the process goes to step 208.

The QoS manager/monitor 121 determines, in step 310, if the social media QoS parameter(s) meet the threshold(s). For example, the QoS manager/monitor 121 may determine network failures, social media network failures, and connection failures in step 310. If the social media QoS parameter(s) meet the threshold(s) (are acceptable) in step 310, the process goes to step 214. Otherwise, if the social media QoS parameter(s) do not meet the threshold(s) in step 310, the process goes to step 208.

The QoS manager/monitor 121 determines, in step 312, if the other media QoS parameter(s) meet the threshold(s). For example, the QoS manager/monitor 121 may determine lost packets, jitter, and network failures for a virtual reality communication session in step 312. If the other media QoS parameter(s) meet the threshold(s) (are acceptable) in step 312, the process goes to step 214. Otherwise, if the other media QoS parameter(s) do not meet the threshold(s) in step 312, the process goes to step 208.

The processes described above may cause both steps 208 and 214 to be implemented at the same time. For example, a contact center agent 131 is originally assigned to support voice, video, IM, and email. Initially, an email server for the contact center 140 has failed, which results in the agent communication endpoint 130 of the contact center agent 131 being prevented from supporting emails in step 208. Later on, the QoS manager/monitor 121 determines in step 204 that the email server is now working. In addition, the QoS manager/monitor 121 also determines, in step 204, that a camera in the agent communication endpoint 130 has failed. As a result, in step 206, both step 208 (the agent communication endpoint 130 is prevented from receiving new video communication sessions) and step 214 (the agent communication endpoint 130 can now receive emails) are implemented at the same time.

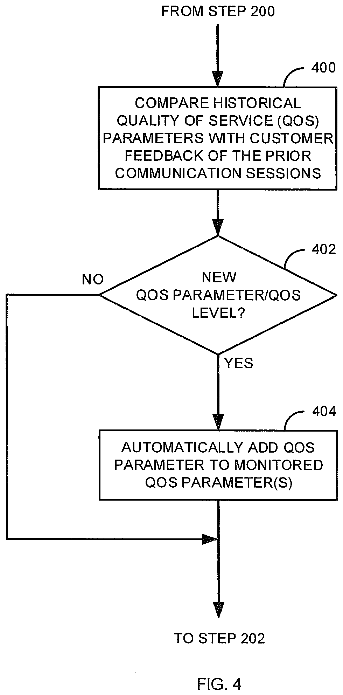

Fig. 4 is a flow diagram of a process for automatically identifying QoS parameter(s) and threshold level(s) based on prior communication sessions and customer feedback. The process of Fig. 4 is an exemplary embodiment that goes between step 200 and 202. The process of Fig. 4 may begin before or after when steps 214 and step 210 (no branch) occur.

After starting or after steps 214/210 (no branch) the QoS manager/monitor 121 compares historical QoS parameters and/or historical customer feedback from the same prior communication sessions (e.g., stored in the historical database 123) in step 400. For example, if a QoS parameter is below a specific level (e.g., a brightness level of a video communication session) for a number of video communication sessions and/or customer feedback is negative for the same communication sessions (or a high number), the QoS manager/monitor 121 may automatically identify the QoS parameter (the brightness level) and/or an associated threshold level (e.g., a new threshold level) in step 402. The QoS parameter and/or level is automatically added to the monitored QoS parameter/threshold level in step 404. The process then goes to step 202. Otherwise, if a new QoS parameter/threshold level is not identified in step 402, the process goes to step 202.

In one embodiment, the QoS manager/monitor 121 may automatically modify a threshold level for an existing QoS parameter. For example, if the threshold level is not met, but the customer feedback on the same communication sessions is always positive, the QoS manager/monitor 121 may change the threshold level to a higher threshold level.

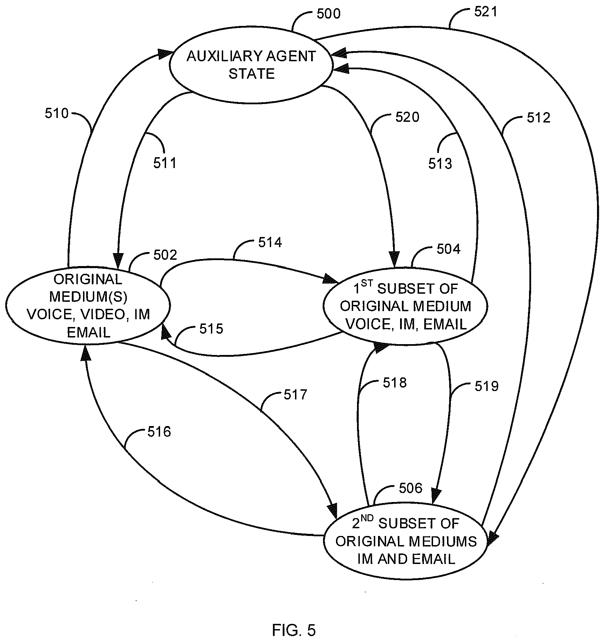

Fig. 5 is a state diagram that shows what media types a contact center agent 131 is supporting based on quality of service parameter(s). Fig. 5 is an exemplary example of where the contact center agent 131 has been originally administered to support the communication mediums of voice, video, IM, and email.

The process starts when the contact center agent 131 starts out in auxiliary agent state 500. The auxiliary agent state 500 is where the contact center agent 131 does not receive any communication sessions in any media types. For example, the contact center agent 131 may be in auxiliary state when logged out. Once the contact center agent 131 exits the auxiliary agent state, in step 511, the contact center agent 131 starts supporting the originally administered communication mediums 502, which are, for example, voice, video, IM, and email. For example, by receiving the communication sessions in the different media types from different contact center queues 122.

The contact center agent 131 may manually go back to the auxiliary agent state 500, in step 510, from supporting the originally administered communication mediums 502. For example, the contact center agent 131 may be taking a lunch break.

Alternatively, the QoS manager/monitor 121 may determine that based on one or more QoS parameters, the contact center agent 131 can no longer support any of the original communication mediums 502, in step 510, and automatically move the agent state to the auxiliary agent state 500. For example, based on a network failure (e.g., a network failure in part of network 110A where the contact center agent 131 is working remotely from the contact center 140), the contact center agent 131 is automatically placed in the auxiliary agent state 500.

If the QoS manager/monitor 121 determines that threshold is not being met (i.e., in step 206), the agent state of the contact center agent 131 goes from the original mediums 502 to where the contact center agent 131 is only allowed to receive new communication sessions in a first subset of the original communication mediums 504 in step 514. For example, the originally supported mediums may go from voice, video, IM, and email to voice, IM, and email in step 514. If the QoS manager/monitor 121 determines that the threshold level is being met (i.e., in step 206), the agent state goes from the first subset of original mediums 504 (e.g., voice, IM, and email) back to the originally supported mediums 502 (e.g., voice, video, IM, and email) in step 515.

The agent state may change from the first subset of original mediums 504 (voice, IM, and email in this example) back to the auxiliary agent state 500 (i.e., in step 206) based on a change in the QoS parameter(s) in step 513. For example, based on a network failure, the agent state may go from the first subset of original mediums 504 to the auxiliary agent state 500 in step 513. The agent state may go from the auxiliary agent state 500 back to the first subset of original mediums 504, in step 520, (i.e., in step 206) based on one or more QoS parameters meeting the threshold(s). For example, the network 110B may be now working.

The agent state may go from the first subset of original mediums 504 to the second subset of original mediums 506, in step 519, based on one or more QoS parameters not meeting the threshold. For example, if the first subset of original mediums 504 is voice, IM, and email, based on a QoS parameter of a high jitter, the agent state goes from supporting voice, IM, and email (the first subset of original mediums 504) to only supporting IM and email (the second subset of original mediums 506) in step 519. The agent state may go back from the second subset of original mediums 506 to the first subset of original mediums 504 (i.e., in step 206) where one or more QoS parameter(s) meet the threshold in step 518. For example, the cause of the high jitter (e.g., high network congestion) is no longer causing the high jitter.

The agent state may go from the second subset of original mediums 506 to the original mediums 502, in step 516, based on one or more QoS parameters meeting the threshold level(s). The agent state may go from the original mediums 502 to the second subset of original mediums 506 in step 517. For example, based on network congestion, which causes packet delays, the original mediums of voice, video, IM, and email may change to only supporting IM and email in step 517.

The agent state may go from the second subset of original mediums 506 to the auxiliary agent state 500 in step 512. For example, because of a network failure, the contact center agent 131 may no longer to be able to support any communication mediums. The agent state may go from the auxiliary agent state 500 to the second subset of original mediums 506 based on a change in one or more QoS parameters in step 521.

Although Fig. 5 only shows a first subset of original mediums 504 and a second subset of original mediums 506, one of skill in the art would recognize that there may be more than two subsets of the original mediums.

Examples of the processors as described herein may include, but are not limited to, at least one of Qualcomm® Snapdragon® 800 and 801, Qualcomm® Snapdragon® 610 and 615 with 4G LTE Integration and 64-bit computing, Apple® A7 processor with 64-bit architecture, Apple® M7 motion coprocessors, Samsung® Exynos® series, the Intel® Core™ family of processors, the Intel® Xeon® family of processors, the Intel® Atom™ family of processors, the Intel Itanium® family of processors, Intel® Core® i5-4670K and i7-4770K 22nm Haswell, Intel® Core® i5-3570K 22nm Ivy Bridge, the AMD® FX™ family of processors, AMD® FX-4300, FX-6300, and FX-8350 32nm Vishera, AMD® Kaveri processors, Texas Instruments® Jacinto C6000™ automotive infotainment processors, Texas Instruments® OMAP™ automotive-grade mobile processors, ARM® Cortex™-M processors, ARM® Cortex-A and ARM926EJ-S™ processors, other industry-equivalent processors, and may perform computational functions using any known or future-developed standard, instruction set, libraries, and/or architecture.

Any of the steps, functions, and operations discussed herein can be performed continuously and automatically.

However, to avoid unnecessarily obscuring the present disclosure, the preceding description omits a number of known structures and devices. This omission is not to be construed as a limitation of the scope of the claimed disclosure. Specific details are set forth to provide an understanding of the present disclosure. It should however be appreciated that the present disclosure may be practiced in a variety of ways beyond the specific detail set forth herein.

Furthermore, while the exemplary embodiments illustrated herein show the various components of the system collocated, certain components of the system can be located remotely, at distant portions of a distributed network, such as a LAN and/or the Internet, or within a dedicated system. Thus, it should be appreciated, that the components of the system can be combined in to one or more devices or collocated on a particular node of a distributed network, such as an analog and/or digital telecommunications network, a packet-switch network, or a circuit-switched network. It will be appreciated from the preceding description, and for reasons of computational efficiency, that the components of the system can be arranged at any location within a distributed network of components without affecting the operation of the system. For example, the various components can be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire and fiber optics, and may take the form of acoustic or light waves, such as those generated during radio-wave and infra-red data communications.

Also, while the flowcharts have been discussed and illustrated in relation to a particular sequence of events, it should be appreciated that changes, additions, and omissions to this sequence can occur without materially affecting the operation of the disclosure.

A number of variations and modifications of the disclosure can be used. It would be possible to provide for some features of the disclosure without providing others.

In yet another embodiment, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the present disclosure includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this disclosure can be implemented as program embedded on personal computer such as an applet, JAVA® or CGI script, as a resource residing on a server or computer workstation, as a routine embedded in a dedicated measurement system, system component, or the like. The system can also be implemented by physically incorporating the system and/or method into a software and/or hardware system.

Although the present disclosure describes components and functions implemented in the embodiments with reference to particular standards and protocols, the disclosure is not limited to such standards and protocols. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

The present disclosure, in various embodiments, configurations, and aspects, includes components, methods, processes, systems and/or apparatus substantially as depicted and described herein, including various embodiments, subcombinations, and subsets thereof. Those of skill in the art will understand how to make and use the systems and methods disclosed herein after understanding the present disclosure. The present disclosure, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease and\or reducing cost of implementation.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one or more embodiments, configurations, or aspects for the purpose of streamlining the disclosure. The features of the embodiments, configurations, or aspects of the disclosure may be combined in alternate embodiments, configurations, or aspects other than those discussed above. This method of disclosure is not to be interpreted as reflecting an intention that the claimed disclosure requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the disclosure.
Moreover, though the description of the disclosure has included description of one or more embodiments, configurations, or aspects and certain variations and modifications, other variations, combinations, and modifications are within the scope of the disclosure, e.g., as may be within the skill and knowledge of those in the art, after understanding the present disclosure. It is intended to obtain rights which include alternative embodiments, configurations, or aspects to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

## Claims

1. A system comprising:
a microprocessor; and
a computer readable medium, coupled with the microprocessor and comprising microprocessor readable and executable instructions that program the microprocessor to:
monitor a value of a quality of service parameter based on one or more communication sessions with an agent communication endpoint of a contact center agent;
determine that the value of the quality of service parameter does not meet a threshold level; and
in response to determining that the value of the quality of service parameter does not meet the threshold level, prevent the agent communication endpoint from receiving new communication sessions in one or more media types originally supported by the contact center agent.

2. The system of claim 1, where preventing the agent communication endpoint from receiving the new communication sessions in the one or more media types originally supported by the contact center agent is preventing a subset of media types originally supported by the contact center agent from being received by the agent communication endpoint.

3. The system of claim 1 or claim 2, wherein preventing the agent communication endpoint from receiving the new communication sessions in the one or more media types originally supported by the contact center agent is accomplished by removing the contact center agent from supporting a contact center queue or contact center pool.

4. The system of any preceding claim, where preventing the agent communication endpoint from receiving the new communication sessions in the one or more media types originally supported by the contact center agent is accomplished by preventing the agent communication endpoint from receiving any of the new communication sessions.

5. The system of any preceding claim, wherein the microprocessor readable and executable instructions further program the microprocessor to:
determine that the value of the quality of service parameter now meets the threshold level; and
in response to determining that the value of the quality of service parameter now meets the threshold level, allow the agent communication endpoint to receive the new communication sessions in the one or more media types originally supported by the contact center agent.

6. The system of any preceding claim, wherein the one or more communication sessions are video communication sessions, wherein the quality of service parameter is a video quality of the one or more video communication sessions, and wherein when the video quality of the one or more video communication sessions does not meet the threshold level, new video communication sessions are prevented from being received by the agent communication endpoint.

7. The system of any preceding claim, wherein the one or more communication sessions are video communication sessions and wherein the quality of service parameter is a video quality of the one or more video communication sessions that is captured by monitoring video content of the one or more video communication sessions to identify at least one of: a video artifact, a level of dimness and a level of brightness, which is in the monitored video content of the one or more video communication sessions.

8. The system of any preceding claim, wherein the one or more communication sessions are audio communication sessions, wherein the quality of service parameter is an audio quality of the one or more audio communication sessions that is captured by monitoring audio content of the one or more audio communication sessions to identify at least one of: an unexpected gap, an unexpected sound, a low volume level, a high volume level, no audio, and a level of noise, which is in the monitored content of the one or more audio communication sessions.

9. The system of any preceding claim, wherein the quality service parameter is only based on media streams originating from the agent communication endpoint.

10. The system of any preceding claim, wherein the quality of service parameter is automatically identified based historical statics of prior communication sessions and customer feedback based on the prior communication sessions.

11. A method comprising:
monitoring, by a microprocessor, a value of a quality of service parameter based on one or more communication sessions with an agent communication endpoint of a contact center agent;
determining, by the microprocessor, that the value of the quality of service parameter does not meet a threshold level; and
in response to determining that the value of the quality of service parameter does not meet the threshold level, preventing, by the microprocessor, the agent communication endpoint from receiving new communication sessions in one or more media types originally supported by the contact center agent.

12. The method of claim 11, where preventing the agent communication endpoint from receiving the new communication sessions in the one or more media types originally supported by the contact center agent is preventing a subset of media types originally supported by the contact center agent from being received by the agent communication endpoint.

13. The method of claim 11 or claim 12, wherein preventing the agent communication endpoint from receiving the new communication sessions in the one or more media types originally supported by the contact center agent is accomplished by removing the contact center agent from supporting a contact center queue or contact center pool.

14. The method of any one of claims 11 to 13, where preventing the agent communication endpoint from receiving the new communication sessions in the one or more media types originally supported by the contact center agent is accomplished by preventing the agent communication endpoint from receiving any of the new communication sessions.

15. The method of any one of claims 11 to 14, further comprising:
determining, by the microprocessor, that the value of the quality of service parameter now meets the threshold level; and
in response to determining that the value of the quality of service parameter now meets the threshold level, allowing, by the microprocessor, the agent communication endpoint to receive the new communication sessions in the one or more media types originally supported by the contact center agent.
